# EUROPEAN PATENT SPECIFICATION

(11) **EP 2 400 126 B1**
(45) Date of publication and mention of the grant of the patent: **06.04.2016**
(21) Application number: 09840323.1
(22) Date of filing: 17.02.2009
(51) Int. Cl.: F02B 37/007, F02B 37/013, F02B 39/00

(54) **STRUCTURE OF FIXING TURBINE HOUSING IN DUAL TURBO-SUPERCHARGER SYSTEM**
STRUKTUR ZUR BEFESTIGUNG EINES TURBINENGEHÄUSES IN EINEM DOPPELTURBOLADERSYSTEM
STRUCTURE DE FIXATION DE CARTER DE TURBINE DANS UN SYSTÈME DE TURBOCOMPRESSEUR DOUBLE

(43) Date of publication of application: 28.12.2011
(73) Proprietor: TOYOTA JIDOSHA KABUSHIKI KAISHA, Toyota-shi, Aichi-ken, 471-8571 (JP)
(72) Inventor: ISOGAI, Tomoyuki, Toyota-shi Aichi 471-8571 (JP)
(74) Representative: Winter, Brandl, Fürniss, Hübner, Röss, Kaiser, Polte - Partnerschaft mbB
(86) International application number: PCT/JP2009/052707
(87) International publication number: WO 2010/095216

(56) References cited:
- DE-A1-102006 004 725
- JP-A- 5 508 462
- JP-A- 2005 120 936
- JP-A- 2005 120 936
- JP-U- 2 064 725
- JP-U- 2 064 725
- US-A- 1 310 682
- US-A- 4 464 902
- US-A1- 2007 169 479

## Description

### TECHNICAL FIELD

The present invention relates to a structure for attaching turbine housings of a twin turbocharging system to an exhaust passage. Specifically, a twin turbocharging system includes two turbochargers and switches between the two turbochargers in accordance with the operating state of the engine.

### BACKGROUND ART

Generally, to increase the power from an engine, for example, of an automobile, it is preferable to increase the amount of air supplied to combustion chambers. Accordingly, supercharging devices have been introduced to forcibly direct air into a combustion chamber, thereby increasing the charging efficiency.

As supercharging devices, turbochargers are commonly employed, which rotate a turbine with exhaust gas so that a compressor coaxial with the turbine is rotated to forcibly supply air into a combustion chamber. One such system is known that uses two turbochargers and, depending on the engine operating state such as the engine speed, switches the two turbochargers in two steps (two-step turbocharging system). Further, another example of such a system includes a larger turbine and a smaller turbine arranged in series along the flow direction of exhaust gas. An exhaust bypass valve is provided in an exhaust bypass passage that bypasses the smaller turbine. In the operational range of the smaller turbine, the exhaust bypass valve is closed. In the operational range of the larger turbine, the exhaust bypass valve is opened. By switching the turbine that is actuated so that supercharging is performed in two steps, a supercharging effect is achieved over a wide range including a low engine speed range to a high engine speed range.

Other than the systems presented above, there is a type in which two turbines are arranged in parallel in the flow direction of exhaust gas. In a low speed range of the engine, one turbine is actuated, and in middle to high speed ranges, the turbines are actuated simultaneously.

In any of the twin turbocharging systems shown above, exhaust gas discharged from the engine is delivered to the turbine of each turbocharger so as to rotate the turbine. Thus, the system requires an exhaust passage for delivering exhaust gas to the exhaust inlet of the turbine housing accommodating the turbine. In this regard, for example, Patent Document 1 discloses that exhaust passage is divided into two branches, and the downstream end of each branch is fastened to the exhaust inlet of the corresponding turbine housing. However, this configuration would complicate the structure for attaching turbine housings to an exhaust passage, the weight would be increased, accordingly. The configuration is still susceptible to improvement in terms of the mountability of twin turbocharging systems to an engine.
Patent Document 1: Japanese Laid-Open Utility Model Publication No. 2-96449.
US 2007/169479 A1 discloses an exhaust manifold releasably connected between a high-pressure turbine housing and a low-pressure turbine housing, such as by clamping, bolting, or otherwise securing their flanges together.

### DISCLOSURE OF THE INVENTION

Accordingly, it is an objective of the present invention to provide a simple structure for attaching two turbine housings to an exhaust passage, thereby improving the mountability to an engine.

The object is achieved by a structure for attaching turbine housings of a twin turbocharging system according to the features of claim 1. Advantageous further developments are set forth in the dependent claim. The present invention provides a structure for attaching turbine housings of a twin turbocharging system. The structure includes an exhaust passage, a first turbine housing, a second turbine housing, and a fastener. The exhaust passage has a first exhaust discharge port and a second exhaust discharge port that are open in different directions at the same position in the flow direction of exhaust gas discharged from an engine. The first turbine housing is located downstream of the first exhaust discharge port, and has a first exhaust inlet and a first turbine. The first turbine is rotated by the exhaust gas introduced via the first exhaust inlet. The second turbine housing is located downstream of the second exhaust discharge port, and has a second exhaust inlet and a second turbine. When exhaust gas is introduced via the second exhaust inlet, the second turbine is rotated by the exhaust gas. With the first exhaust inlet brought close to the first exhaust discharge port, and the second exhaust inlet brought close to the second exhaust discharge port, the fastener fastens, to each other, a part of the first turbine housing in the vicinity of the first exhaust inlet and a part of the second turbine housing in the vicinity of the second exhaust inlet 35.

According to this configuration, when attaching the first and second turbine housings to the exhaust passage, the first exhaust inlet of the first turbine housing is brought close to the first exhaust discharge port of the exhaust passage, and the second exhaust inlet of the second turbine housing is brought close to the second exhaust discharge port of the exhaust passage. This causes the exhaust passage to be sandwiched from both sides by the first turbine housing and the second turbine housing. A part of the first turbine housing in the vicinity of the first exhaust inlet and a part of the second turbine housing in the vicinity of the second exhaust inlet are fastened to each other by the fastener. The fastening causes a part of the first turbine housing in the vicinity of the first exhaust inlet to be pressed against a part of the exhaust passage in the vicinity of the first exhaust discharge port. A part of the second turbine housing in the vicinity of the second exhaust inlet is pressed against a part of the exhaust passage in the vicinity of the second exhaust discharge port. The first turbine housing and the second turbine housing are attached to the exhaust passage in the above described manner. However, the first turbine housing and the second turbine housing are not directly attached to the exhaust passage.

Therefore, no structure is required for directly fastening the part of the first turbine housing in the vicinity of the first exhaust inlet to the part of the exhaust passage in the vicinity of the first exhaust discharge port. Likewise, no structure is required for directly fastening the part of the second turbine housing in the vicinity of the second exhaust inlet to the part of the exhaust passage in the vicinity of the second exhaust discharge port. Accordingly, the exhaust passage does not need to have a section to which the first turbine housing is directly fastened with a fastener or a section to which the second turbine housing is directly fastened. This simplifies the structure for attaching the first turbine housing to the exhaust passage and the structure for attaching the second turbine housing to the exhaust passage, and reduces the space occupied by the attaching structures. The twin turbocharging system is therefore easily mounted on the engine.

In accordance with one aspect of the present invention, the engine has an exhaust manifold, which includes a converging portion at which flows of exhaust gas from the engine merge, and the exhaust passage includes a first branch pipe section and a second branch pipe section, which branch from the converging portion. The first branch pipe section has, at the downstream end thereof, the first exhaust discharge port, and the second branch pipe section has, at the downstream end thereof, the second exhaust discharge port.

According to this configuration, when the first turbine housing and the second turbine housing are fastened to each other by the fastener, with the first branch pipe section and the second branch pipe section of the exhaust passage held in between, the first turbine housing and the second turbine housing are pressed against the downstream end of the first branch pipe section and the downstream end of the second branch pipe section, respectively. Accordingly, the first turbine housing is attached to the exhaust manifold (the first branch pipe section) with the first exhaust inlet connected to the first exhaust discharge port. Further, the second turbine housing is attached to the exhaust manifold (the second branch pipe section) with the second exhaust inlet connected to the second exhaust discharge port.

The first branch pipe section and the second branch pipe section preferably extend in the opposite directions and form a straight line, while being perpendicular to the flow direction of exhaust gas in the converging portion.

According to this configuration, the first branch pipe section and the second branch pipe section are both located on the same plane that is perpendicular to the flow direction of exhaust in the converging portion. Therefore, compared to a case in which the branch pipe sections extend along a direction different from that described above (for example, inclined relative to the flow direction of exhaust gas in the converging portion), the structure for attaching the turbine housings to the exhaust passage occupies a smaller space with respect to the flow direction of exhaust gas. The mountability of the twin turbocharging system to the engine is thus further improved.

In accordance with one aspect of the present invention, a first flange is provided in the first turbine housing at a position about the first exhaust inlet, and a second flange is provided in the second turbine housing at a position about the second exhaust inlet. The first turbine housing and the second turbine housing are fastened by the fastener and at the first flange and the second flange.

According to this configuration, the first turbine housing and the second turbine housing are fastened to the exhaust passage by the fastener and at the first flange located about the first exhaust inlet and the second flange located about the second exhaust inlet. Accordingly, the second turbine housing and the second turbine housing are attached to the exhaust passage held between the first flange and the second flange. Therefore, to attach the first turbine housing to the exhaust passage, no additional flange that corresponds to the first flange needs to be provided about the first exhaust discharge port of the exhaust passage. Also, to attach the second turbine housing to the exhaust passage, no additional flange that corresponds to the second flange needs to be provided about the second exhaust discharge port of the second exhaust discharge port.

The fastener may include a bolt and a nut for being threaded to the bolt. The bolt and the nut fasten the first turbine housing and the first turbine housing. The bolt may extend through both the first and second turbine housings. Alternatively, the bolt may be implanted in one of the first and second turbine housings and extend through the other (stud bolt).

According to this configuration, when the nut threadable to the bolt is tightened, the distance between the first turbine housing and the second turbine housing is reduced. The first turbine housing is pressed against a part of the exhaust passage in the vicinity of the first exhaust discharge port, and the second turbine housing is pressed against a part of the exhaust passage in the vicinity of the second exhaust discharge port. This fastens the first and second turbine housings to the exhaust passage.

In accordance with one aspect of the present invention, a first exhaust outlet, which is an outlet for exhaust gas that has passed through the first turbine housing, opens at a position in the first turbine housing that faces the first branch pipe section. An exhaust sub-inlet, which is an inlet of exhaust gas different from the second exhaust inlet, opens in a part of the second turbine housing that faces the second exhaust discharge port and is different from the position of the second exhaust inlet. A communication pipe is provided in the vicinity of the exhaust passage, the communication pipe connecting the first exhaust outlet and the exhaust sub-inlet to each other when the first turbine housing and the second turbine housing are fastened to each other by the fastener.

According to this configuration, when the part of the first turbine housing in the vicinity of the first exhaust inlet and the part of the second turbine housing in the vicinity of the second exhaust inlet are fastened to each other by the fastener with the exhaust passage in between, the first turbine housing and the second turbine housing are each attached to the exhaust passage as described above. In addition, the fastening causes the communication pipe located in the vicinity of the exhaust passage to be held between the first turbine housing and the second turbine housing. Therefore, the first exhaust outlet of the first turbine housing and the exhaust sub-inlet of the second turbine housing are connected to each other by the communication pipe. In other words, the first turbine housing and the second turbine housing are attached to the communication pipe.

Therefore, no structure is required for directly fastening the part of the first turbine housing in the vicinity of the first exhaust outlet to the communication pipe. Likewise, no structure is required for directly fastening the part of the second turbine housing in the vicinity of the exhaust sub-inlet to the communication pipe. Accordingly, the communication pipe does not need to have a section to which the first turbine housing is directly fastened with a fastener or a section to which the second turbine housing is directly fastened. This simplifies the structure for attaching the first turbine housing to the communication pipe and the structure for attaching the second turbine housing to the communication pipe, and reduces the space occupied by the structures for attaching the turbine housings to the exhaust passage. The mountability of the twin turbocharging system to the engine is thus further improved.

In a case in which the first exhaust outlet and the exhaust sub-inlet are connected to each other by the communication pipe as described above, exhaust gas that has passed through the first turbine housing is allowed to flow through the communication pipe after exiting the first exhaust outlet, and flows into the second turbine housing via the exhaust sub-inlet. In this case, as a path for supplying exhaust gas to the second turbine in the second turbine housing, a path including the first exhaust discharge port of the exhaust passage, the first exhaust inlet of the first turbine housing, the first exhaust outlet, the communication pipe, and the exhaust sub-inlet of the second turbine housing in that order is can be used in addition to the path including the second exhaust discharge port of the exhaust passage and the second exhaust inlet of the second turbine housing in that order.

### BRIEF DESCRIPTION OF THE DRAWINGS

Fig. 1 is a conceptual diagram showing a two-step (serial) turbocharging system according to one embodiment of the present invention;
Fig. 2 is a partial plan view showing the exhaust manifold of Fig. 1, before a first turbine housing and a second turbine housing are attached thereto;
Fig. 3 is a partial perspective view showing the positional relationship of parts in the converging portion in the exhaust manifold of Fig. 2;
Fig. 4 is a front view, with a part cut away, showing the exhaust manifold of Fig. 1, and first and second turbine housings attached to the exhaust manifold;
Fig. 5 is an enlarged partial front view illustrating section X in Fig. 4;
Fig. 6 is a partial front view showing the exhaust manifold of Fig. 5, before a first turbine housing and a second turbine housing are attached thereto;
Fig. 7 is a front view of a parallel twin turbocharging system according to a not claimed embodiment, showing, with a part cut away, an exhaust manifold, and first and second turbine housings attached to the exhaust manifold; and
Fig. 8 is a diagram showing a first branch pipe section and a second branch pipe section according to another not claimed embodiment, in which (A) is a partial side view showing a state before first and second turbine housings are attached to the branch pipes, and (B) is a side view showing a state in which the turbine housings have been attached.

### BEST MODE FOR CARRYING OUT THE INVENTION

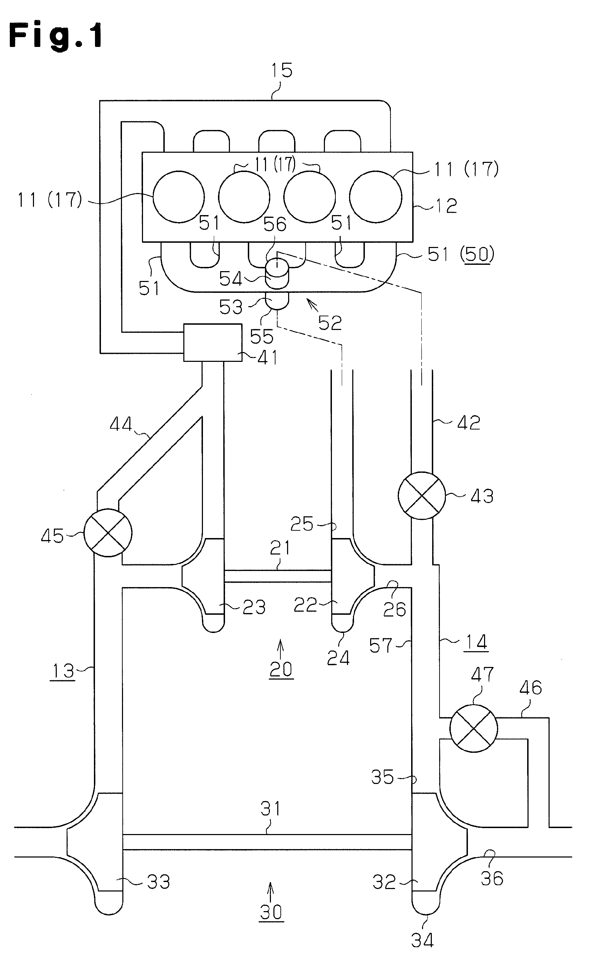

One embodiment of the present invention will now be described with reference to Figs. 1 to 6.

Fig. 1 shows a conceptual configuration of a two-step (serial) turbocharging system used in an engine 12 having a plurality of cylinders 11. An intake passage 13 and an exhaust passage 14 are connected to the engine 12. A downstream portion of the intake passage 13 is formed by an intake manifold 15 attached to the engine 12. The intake passage 13 is divided into several branches at the intake manifold 15. The branches divide and deliver air to a combustion chamber 17 of each cylinder of the engine 12. In each combustion chamber 17, air-fuel mixture of the air and fuel supplied by a fuel injection valve (not shown) is burned. An upstream portion of the exhaust passage 14 is formed by an exhaust manifold 50 attached to the engine 12. The exhaust passage 14 is merged into one at the exhaust manifold 50. The flows of exhaust gas from the combustion chambers 17 of the cylinders 11 are merged into one while flowing through the exhaust manifold 50.

The engine 12 has a high-pressure turbocharger 20 and a low-pressure turbocharger 30, which are connected in series. The high-pressure turbocharger 20 has a first turbine 22 and a first compressor 23, which are coupled to each other by a shaft 21 to rotate integrally. The first turbine 22 is located downstream of the exhaust manifold 50 in the exhaust passage 14. The first compressor 23 is located upstream of the intake manifold 15 in the intake passage 13. In the high-pressure turbocharger 20, when exhaust gas is supplied to the first turbine 22 and the force of the exhaust gas rotates the first turbine 22, the first compressor 23 is actuated to compress air, so that the compressed air is forced into (supercharged) the combustion chamber 17 of each cylinder 11.

The low-pressure turbocharger 30 has a second turbine 32 and a second compressor 33, which are coupled to each other by a shaft 31 to rotate integrally. The second turbine 32 is formed to be larger than the first turbine 22 of the high-pressure turbocharger 20, and is located downstream of the first turbine 22 in the exhaust passage 14. The second compressor 33 is formed to be larger than the first compressor 23 of the high-pressure turbocharger 20, and is located upstream of the first compressor 23 in the intake passage 13. In the low-pressure turbocharger 30, when exhaust gas is supplied to the second turbine 32 and the force of the exhaust gas rotates the second turbine 32, the second compressor 33 is actuated to compress air, so that the compressed air is pressed into the combustion chamber 17 of each cylinder 11.

Further, an intercooler 41 is located downstream of the first compressor 23 in the intake passage 13. The intercooler 41 cools the air that has been compressed and heated by the first compressor 23 and the second compressor 33.

In the high-pressure turbocharger 20, the first turbine 22 is accommodated in a first turbine housing 24. In the low-pressure turbocharger 30, the second turbine 32 is accommodated in a second turbine housing 34.

The first turbine housing 24 has a first exhaust inlet 25 and a first exhaust outlet 26. Also, the second turbine housing 34 has a second exhaust inlet 35 and a second exhaust outlet 36.

The exhaust manifold 50 and the first exhaust inlet 25 of the first turbine housing 24 are connected to each other by a part of the first exhaust inlet 25. Further, the first exhaust outlet 26 of the first turbine housing 24 and the second exhaust inlet 35 of the second turbine housing 34 are connected to each other by a section of the exhaust passage 14.

An exhaust bypass passage 42, which bypasses the first turbine 22, is connected to the exhaust passage 14. The upstream end of the exhaust bypass passage 42 is connected to the exhaust manifold 50, and the downstream end of the exhaust bypass passage 42 is connected to a section of the exhaust passage 14 between the first turbine 22 and the second turbine 32. An exhaust bypass valve 43 is provided on the exhaust bypass passage 42 to selectively open and close the exhaust bypass passage 42.

An intake bypass passage 44, which bypasses the first compressor 23, is connected to the intake passage 13. An intake bypass valve 45 is provided on the intake bypass passage 44 to selectively open and close the intake bypass passage 44.

The exhaust bypass valve 43 and the intake bypass valve 45 are actuated, for example, in the following manner in accordance with the operating state of the engine 12. The exhaust bypass valve 43 and the intake bypass valve 45 are closed in a range of low engine speed of the engine 12 (low speed range). When the exhaust bypass valve 43 is closed, the flow of exhaust gas through the exhaust bypass passage 42 is blocked. That is, exhaust gas does not pass through the exhaust bypass passage 42. Exhaust gas does not bypass the first turbine 22 and is not directly supplied to the second turbine 32. Also, when the intake bypass valve 45 is closed, the flow of air through the intake bypass passage 44 is blocked. That is, air does not bypass the first compressor 23 and is not directly supplied to the engine 12. When both the exhaust bypass valve 43 and the intake bypass valve 45 are closed, all the exhaust gas flowing through the exhaust passage 14 passes through the first turbine 22, and all the air flowing through the intake passage 13 passes through the first compressor 23. As a result, supercharging is performed by the high-pressure turbocharger 20, which starts up in a short time. In this manner, adequate supercharging pressure is obtained in a range where the speed of the engine 12 is low.

In a range of high engine speed of the engine 12 (high speed range), the exhaust bypass valve 43 and the intake bypass valve 45 are opened. When the exhaust bypass valve 43 is open, exhaust gas passes through the exhaust bypass passage 42. Exhaust gas bypasses the first turbine 22 and is directly supplied to the second turbine 32. In this case, most of the exhaust gas flows from the engine 12 directly to the second turbine 32 of the low-pressure turbocharger 30, and the high-pressure turbocharger 20 practically stops operating. When the intake bypass valve 45 is open, most of air that has passed through the second compressor 33 flows through the intake bypass passage 44. That is, air bypasses the first compressor 23 and is directly supplied to the engine 12, so that the high-pressure turbocharger 20 practically stops operating. As a result, supercharging is mainly performed by the low-pressure turbocharger 30, which is superior in operating characteristics in high speed ranges of the engine 12.

In this manner, operation of each of the turbochargers 20, 30 is switched according to the speed of the engine 12, so that supercharging is performed in two steps.

As the exhaust bypass valve 43 and the intake bypass valve 45, a type of valve may be used that can be held in an intermediate state between the closed state and the open state. In this case, for example, when the speed of the engine 12 is in an intermediate range (middle speed range), the exhaust bypass valve 43 and the intake bypass valve 45 are set to the intermediate state (intermediate opening degree). Thus, the high-pressure turbocharger 20 and the low-pressure turbocharger 30 both operate, so that adequate supercharging pressure is obtained in the middle speed range. Also, the exhaust bypass valve 43 and the intake bypass valve 45 may be operated in accordance with a parameter other than the speed of the engine 12. For example, the engine load may be used as a parameter.

Further, an exhaust bypass passage 46, which bypasses the second turbine 32, is connected to the exhaust passage 14. A wastegate valve 47 is provided on the exhaust bypass passage 46. The wastegate valve 47 is opened when the compressor discharge pressure of the low-pressure turbocharger 30 reaches or surpasses a predetermined value. Accordingly, some of exhaust gas bypasses the second turbine 32 and flows to the exhaust bypass passage 46. This lowers the rotational speed of the low-pressure turbocharger 30, so that the discharge pressure is prevented from being excessively increased.

The two-step (serial) turbocharging system is configured as described above. In the system, the first turbine housing 24 and the second turbine housing 34 are attached to the exhaust manifold 50 in the following manner.

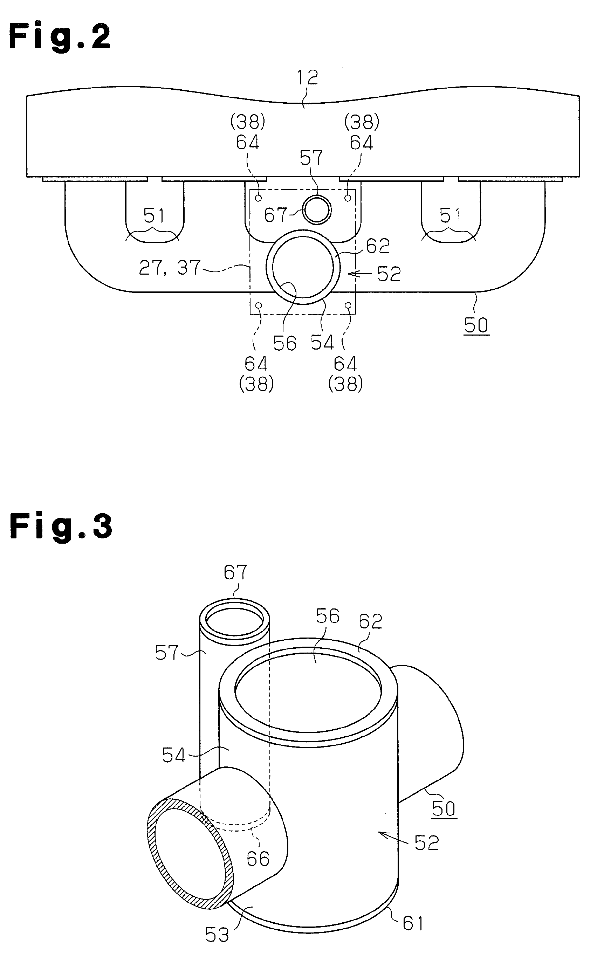

As shown in at least one of Figs. 1 to 3, the exhaust manifold 50 includes a plurality of pipes 51, through which exhaust gas from the combustion chambers 17 of the cylinder 11 flows. The pipes 51 are merged into one on the downstream side. A section at the pipes 51 are merged is hereinafter referred to as a converging portion 52. The exhaust manifold 50 includes a first branch pipe section 53 and a second branch pipe section 54, which branches from the converging portion 52. The first branch pipe section 53 and the second branch pipe section 54 are both cylindrical, and extend in opposite directions (upward and downward as viewed in Fig. 3) from the converging portion 52, so as to form a single straight line as a whole. The downstream end of the first branch pipe section 53 (the lower end in Fig. 3) is open and forms a first exhaust discharge port 55 (see Fig. 1). The downstream end of the second branch pipe section 54 (the upper end as viewed in Figs. 1 and 3) is open and forms a second exhaust discharge port 56. In this manner, the first exhaust discharge port 55 and the second exhaust discharge port 56 open in different directions (upward and downward) at the same position in the flow direction of exhaust gas discharged from the engine 12.

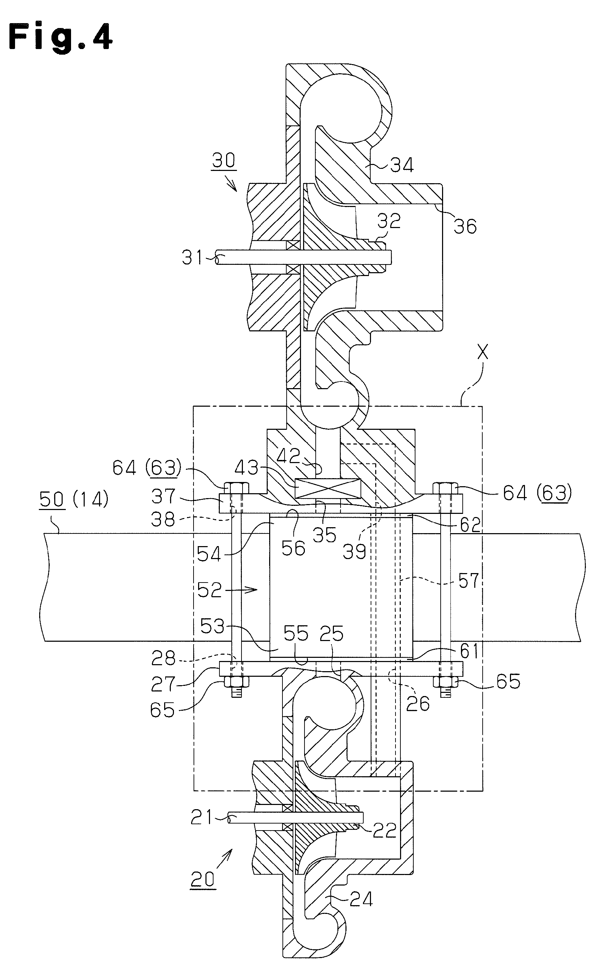

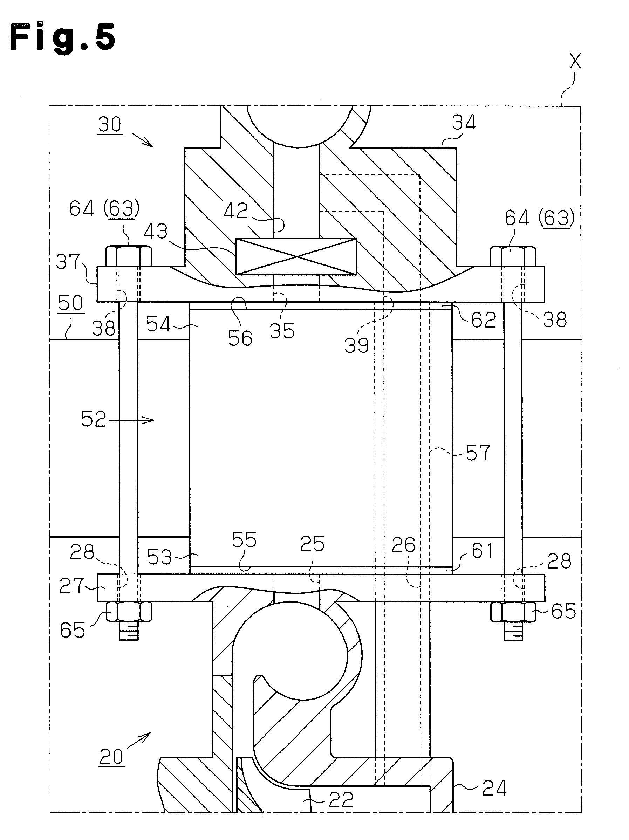

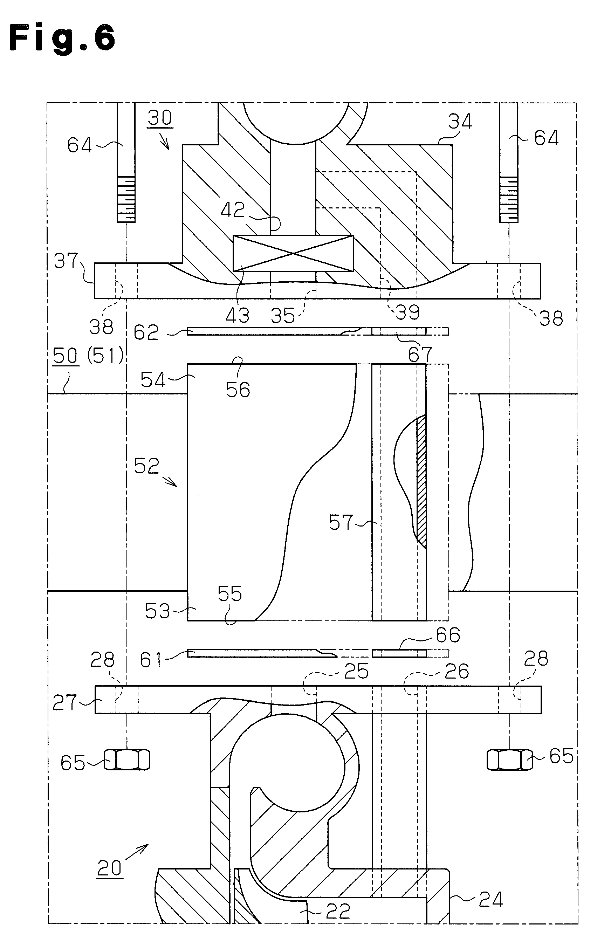

Fig. 4 shows, with a part cut away, the exhaust manifold 50, and the first and second turbine housings 24, 25 attached to the exhaust manifold 50. Fig. 5 is an enlarged view of section X in Fig. 4, and Fig. 6 shows the exhaust manifold 50 of Fig. 5, before the turbine housings 24, 34 are attached thereto. Fig. 6 shows a state in which, in addition to the first and second turbine housings 24, 34, a part of the exhaust manifold 50 (a part of the converging portion 52 and parts of the first and second branch pipe sections 53, 54), and parts of first and second gaskets 61, 62 are cut away.

As shown in at least one of Figs. 4 to 6, the exhaust bypass passage 42 is located in the second turbine housing 34. The upstream end of the exhaust bypass passage 42 opens at the lower end face of the second turbine housing 34. In the present embodiment, the opening of the exhaust bypass passage 42 forms the second exhaust inlet 35.

A first flange 27 is provided in the first turbine housing 24 at a position about the first exhaust inlet 25. The annular first gasket 61 is provided between the first flange 27 and the downstream end of the first branch pipe section 53 (the lower end in Figs. 4 and 5). Also, a second flange 37 is provided in the second turbine housing 34 at a position about the second exhaust inlet 35. The annular second gasket 62 is provided between the second flange 37 and the downstream end of the second branch pipe section 54 (the upper end in Figs. 4 and 5).

The first flange 27 and the second flange 37 are fastened to each other by a plurality of fasteners 63, in a state where the first exhaust inlet 25 is close to the first exhaust discharge port 55, and the second exhaust inlet 35 is close to the second exhaust discharge port 56. More specifically, each fastener 63 is formed by a bolt 64 and a nut 65 threaded to the bolt 64. Through holes 28 are formed in a plurality of sections, for example, four corners, of the first flange 27. Through holes 38, which face the through holes 28, are formed in a plurality of sections in the second flange 37 (refer to Fig. 2). Each bolt 64 is passed through the first and second flanges 27, 37, at a facing pair of the through holes 28, 38, and a nut 65 is threaded to the bolt 64.

Further, the first exhaust outlet 26, which is an outlet for exhaust gas that has passed through the first turbine housing 24, opens at a position (surface) in the first turbine housing 24 that faces the first branch pipe section 53. The second turbine housing 34 has an exhaust sub-inlet 39, which is an inlet of exhaust gas different from the second exhaust inlet 35. The exhaust sub-inlet 39 is located in a part (surface) of the second turbine housing 34 that faces the second branch pipe section 54 and is different from the position of the second exhaust inlet 35. The first exhaust outlet 26 and the exhaust sub-inlet 39 are located at opposite positions with the converging portion 52, the first branch pipe section 53, and the second branch pipe section 54 of the exhaust manifold 50 in between.

The exhaust manifold 50 includes, as a part thereof, a communication pipe 57. The communication pipe 57 is located in the vicinity of the converging portion 52 and the branch pipe sections 53, 54, more specifically, on a line connecting the first exhaust outlet 26 and the exhaust sub-inlet 39 to each other. The communication pipe 57 is connected to an arbitrary part of the exhaust manifold 50. One end face (lower end face) of the communication pipe 57 is located on the same plane as the first exhaust discharge port 55 of the first branch pipe section 53, and the other end face (upper end face) of the communication pipe 57 is located on the same plane as the second exhaust discharge port 56 of the second branch pipe section 54. An annular third gasket 66 is provided between the communication pipe 57 and the first flange 27, and an annular fourth gasket 67 is provided between the communication pipe 57 and the second flange 37 (refer to Fig. 6). The third gasket 66 may be formed integrally with the first gasket 61. Likewise, the fourth gasket 67 may be formed integrally with the second gasket 62.

In a state where the first flange 27 and the second flange 37 are fastened to each other by the fasteners 63, the first exhaust outlet 26 and the exhaust sub-inlet 39 are connected to each other by the third gasket 66, the communication pipe 57, and the fourth gasket 67.

According to the above described embodiment, exhaust gas discharged from the combustion chambers 17 of the cylinders 11 of the engine 12 flows through the pipes 51 of the exhaust manifold 50 and is collected by the converging portion 52. The exhaust gas collected by the converging portion 52 is then divided into two flows by the first branch pipe section 53 and the second branch pipe section 54. Paths through which exhaust gas is discharged from the exhaust manifold 50 include a path that passes through the first exhaust discharge port 55 of the first branch pipe section 53 and a path that passes through the second exhaust discharge port 56 of the second branch pipe section 54. A path through which exhaust gas flows is determined between the paths depending on the state of the exhaust bypass valve 43 described above.

When the speed of the engine 12 is low and the exhaust bypass valve 43 is closed, the flow of exhaust gas through the exhaust bypass passage 42 is blocked. The exhaust gas that has passed through the converging portion 52 is discharged through the first exhaust discharge port 55, flows into the first turbine housing 24 through the first exhaust inlet 25, and rotates the first turbine 22. The exhaust gas that has passed through the first turbine 22 is discharged from the first turbine housing 24 through the first exhaust outlet 26 and then flows through the communication pipe 57. Subsequently, the exhaust gas flows into the second turbine housing 34 through the exhaust sub-inlet 39 and rotates the second turbine 32. After passing through the second turbine 32, the exhaust gas is discharged to the downstream side of the exhaust passage 14 from the second exhaust outlet 36. At this, the exhaust gas in the converging portion 52 does not pass through the exhaust bypass passage 42. That is, the exhaust gas in the converging portion 52 does not bypass the first turbine 22 and is not directly supplied to the second turbine 32. The low-pressure turbocharger 30 is therefore practically not operated.

When the speed of the engine 12 is high, and the exhaust bypass valve 43 is opened, exhaust gas flows into the exhaust bypass passage 42 from the second exhaust inlet 35. The exhaust gas passes through the exhaust bypass passage 42. Exhaust gas bypasses the first turbine 22 and is directly supplied to the second turbine 32. In this case, most of the exhaust gas that has passed through the converging portion 52 is discharged from the second exhaust discharge port 56 and flows through the exhaust bypass passage 42. The exhaust gas is supplied to and rotates the second turbine 32. After passing through the second turbine 32, the exhaust gas is discharged to the downstream side of the exhaust passage 14 from the second exhaust outlet 36. In a case where the exhaust bypass valve 43 is opened, the amount of exhaust gas is reduced that is discharged from the first exhaust discharge port 55 after passing through the converging portion 52 and flows into the first turbine housing 24 via the first exhaust inlet 25 to rotate the first turbine 22. In this manner, in a high speed range of the engine 12, the exhaust gas flows from the engine 12 directly to the second turbine 32 of the low-pressure turbocharger 30, and the high-pressure turbocharger 20 practically does not operate.

When the first turbine housing 24 and the second turbine housing 34 are attached to the exhaust manifold 50, the following steps are performed.

As shown in Fig. 6, the first gasket 61 is placed below the first branch pipe section 53, and the third gasket 66 is placed below the communication pipe 57. With the first flange 27 at the top of the first turbine housing 24, the first exhaust inlet 25 of the first turbine housing 24 is brought close to the first exhaust discharge port 55 of the first branch pipe section 53. The first exhaust outlet 26 is brought close to the communication pipe 57. Also, the second gasket 62 is placed above the second branch pipe section 54, and the fourth gasket 67 is placed above the communication pipe 57. With the second flange 37 at the top of the second turbine housing 34, the second exhaust inlet 35 of the second turbine housing 34 is brought close to the second exhaust discharge port 56 of the second branch pipe section 54. The exhaust sub-inlet 39 is brought close to the upper end of the communication pipe 57. Accordingly, the converging portion 52, the branch pipe sections 53, 54, and the communication pipe 57 the exhaust manifold 50 are sandwiched from above and below by the second turbine housing 34 and the first turbine housing 24 with the gaskets 62, 67 and the gaskets 61, 66 in between.

The bolts 64 are sequentially inserted from above the second flange 37 and into the through holes 38 and the through holes 28 of the first flange 27 located below the through holes 38. The nuts 65 are threaded to the lower ends of the bolts 64 projecting downward from the first flange 27. By fastening the nuts 65, the first turbine housing 24 and the second turbine housing 34 are brought closer to each other. As the fastening of the nuts 65 progresses, the first flange 27 is pressed against the downstream end (in the vicinity of the first exhaust discharge port 55) of the first branch pipe section 53 with the first gasket 61 in between, and is pressed against the lower end of the communication pipe 57 with the third gasket 66 in between. Also, the second flange 37 is pressed against the downstream end (in the vicinity of the second exhaust discharge port 56) of the second branch pipe section 54 with the second gasket 62 in between, and is pressed against the upper end of the communication pipe 57 with the fourth gasket 67 in between.

Accordingly, the first turbine housing 24 is attached to the exhaust manifold 50 (the first branch pipe section 53) with the first exhaust inlet 25 connected to the first exhaust discharge port 55. Further, the second turbine housing 34 is attached to the exhaust manifold 50 (the second branch pipe section 54) with the second exhaust inlet 35 connected to the second exhaust discharge port 56. At this, the first turbine housing 24 and the second turbine housing 34 are not directly attached to the first branch pipe section 53 and the second branch pipe section 54.

Through the above described connecting, the first turbine housing 24 and the second turbine housing 34 are attached to the communication pipe 57 with the first exhaust outlet 26 of the first turbine housing 24 and the exhaust sub-inlet 39 of the second turbine housing 34 connected to each other by the communication pipe 57. At this, the first turbine housing 24 and the second turbine housing 34 are not directly attached to the communication pipe 57.

The present embodiment described above has the following advantages.
(1) The exhaust manifold 50, which forms a part of the exhaust passage 14, includes the first exhaust discharge port 55 and the second exhaust discharge port 56, which open in different directions at the same position in the flow of exhaust gas (the converging portion 52). With the first exhaust inlet 25 brought close to the first exhaust discharge port 55, and the second exhaust inlet 35 brought close to the second exhaust discharge port 56, a part of the first turbine housing 24 in the vicinity of the first exhaust inlet 25 and a part of the second turbine housing 34 in the vicinity of the second exhaust inlet 35 are fastened to each other by the fasteners 63.
   Therefore, the exhaust manifold 50 does not need to have a structure, such as a flange corresponding to the first flange 27, for directly fastening a part of the first turbine housing 24 in the vicinity of the first exhaust inlet 25 to a part in the vicinity of the first exhaust discharge port 55. Likewise, the exhaust manifold 50 does not need to have a structure, such as a flange corresponding to the second flange 37, for directly fastening a part of the second turbine housing 34 in the vicinity of the second exhaust inlet 35 to a part in the vicinity of the second exhaust discharge port 56.
   As a result, the structure for attaching the first turbine housing 24 to the exhaust passage 14 (the exhaust manifold 50) and the structure attaching the second turbine housing 34 to the exhaust passage 14 (the exhaust manifold 50) are simplified. Also, the space occupied by the attaching structures is reduced, so that the mountability of the two-step (serial) turbocharging system to the engine 12 is improved. Also, the exhaust passage 14 does not need to have flanges. Compared to a case such flanges are provided, the two-step (serial) turbocharging system is advantageous in the lighter weight, the smaller thermal capacity, and lower manufacturing costs of the exhaust manifold 50.
   Further, compared to a case where the first turbine housing 24 and the second turbine housing 34 are directly but separately attached to the exhaust passage 14 (the exhaust manifold 50), the number of fasteners is reduced. Also, sections at which the fasteners 63 are fastened are reduced. This reduces the number of steps for fastening. In this regard, the manufacturing costs of the two-step (serial) supercharging system are reduced.
(2) The exhaust manifold 50, which forms a part of the exhaust passage 14, includes the first branch pipe section 53 and the second branch pipe section 54, which branch from the converging portion 52, the first exhaust discharge port 55 at the downstream end of the first branch pipe section 53, and the second exhaust discharge port 56 at the downstream end of the second branch pipe section 54. Further, the first branch pipe section 53 and the second branch pipe section 54 extend in the opposite directions (upward and downward directions) and form a straight line, while being perpendicular to the flow direction of exhaust gas in the converging portion 52.
   Accordingly, the first branch pipe section 53 and the second branch pipe section 54 can be arranged on the same plane that is perpendicular to the flow direction of exhaust gas (horizontal direction) in the converging portion 52. As a result, compared to a case in which the branch pipe sections 53, 54 extend along a direction different from that described above (for example, inclined relative to the flow direction (horizontal direction) of exhaust gas in the converging portion), the space occupied by the branch pipe sections 53, 54 with respect to the horizontal direction, along which exhaust gas flows in the converging portion 52, is further reduced. The mountability of the two-step (serial) turbocharging system to the engine 12 is further improved.
(3) The first exhaust outlet 26 is provided at a part of the first turbine housing 24 that faces the first branch pipe section 53 (the first exhaust discharge port 55). Further, the exhaust sub-inlet 39 is provided at a part of the second turbine housing 34 that faces the second branch pipe section 54 (the second exhaust discharge port 56) and is different from the second exhaust inlet 35. The first turbine housing 24 and the second turbine housing 34 are fastened to parts of the exhaust manifold 50 in the vicinity of the converging portion 52 and the branch pipe sections 53, 54 by the fasteners 63, so that the communication pipe 57 is provided to connect the first exhaust outlet 26 and the exhaust sub-inlet 39 to each other.

Therefore, at the lower end of the communication pipe 57, a structure for fastening the first turbine housing 24 by the fasteners 63, for example, a flange corresponding to the first flange 27, does not need to be provided. Likewise, at the upper end of the communication pipe 57, a structure for fastening the second turbine housing 34 by the fasteners 63, for example, a flange corresponding to the second flange 37, does not need to be provided. This simplifies the structure for attaching the first turbine housing 24 to the communication pipe 57 and the structure for attaching the second turbine housing 34 to the communication pipe 57, and reduces the space occupied by the attaching structures. The mountability of the two-step (serial) turbocharging system to the engine 12 is further improved.

The present invention may be embodied in the following forms.

As the bolts 64, which are part of the fasteners 63, stud bolts may be used that are implanted in one of the first and second turbine housings 24, 34 and are passed through the other. In this case, the first flange 27 and the second flange 37 may be omitted.

The first turbine housing 24 may have an annular groove of which the size is sufficient for receiving the downstream end of the first branch pipe section 53, and the first and third gaskets 61, 66. According to this configuration, since the first gasket 61 and the third gasket 66 are arranged in the annular groove, the positions of the gaskets 61, 66 relative to the first turbine housing 24 are easily determined. Since the downstream end of the first branch pipe section 53 is received by the annular groove, the position of the first branch pipe section 53 relative to the first turbine housing 24 is easily determined.

To the same effect, the second turbine housing 34 may have an annular groove of which the size is sufficient for receiving the downstream end of the second branch pipe section 54, and the second and fourth gaskets 62, 67.

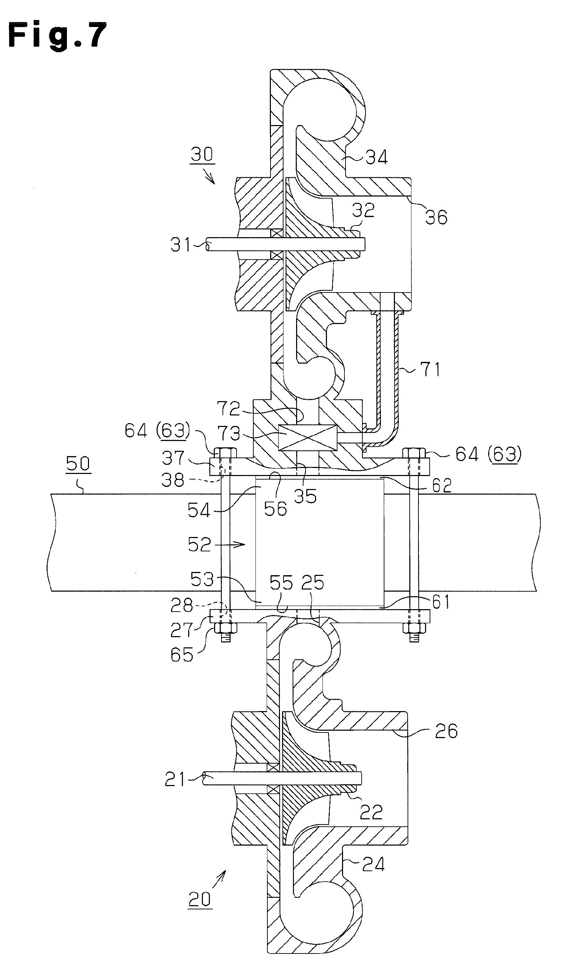

In a not claimed embodiment, one may provide a parallel twin turbocharging system, in which two turbochargers are arranged in parallel, and one of the turbochargers is operated in a low speed range of an engine, and both turbochargers are operated in a high speed range of the engine. Fig. 7 shows an example of such a not claimed embodiment.

In this case, unlike the previous embodiment, a first exhaust outlet 26 opens at a part of the first turbine housing 24 that does not face the first branch pipe section 53 (the first exhaust discharge port 55). A second turbine housing 34 does not have an exhaust sub-inlet 39 separate from the second exhaust inlet 35. In accordance with this, the exhaust manifold 50 does not have a communication pipe 57 for connecting an exhaust sub-inlet 39 and the first exhaust outlet 26 to each other.

Instead, the second turbine housing 34 has an exhaust bypass passage 71, which bypasses the second turbine 32. The exhaust bypass passage 42 in the previous embodiment is replaced by an exhaust passage 72, which connects the second exhaust inlet 35 and the second exhaust outlet 36 to each other. The exhaust bypass valve 43 in the previous embodiment is replaced by an exhaust switching valve 73 provided at the merging section of the exhaust passage 72 and the exhaust bypass passage 71. The exhaust switching valve 73 closes one of the exhaust passage 72 and the exhaust bypass passage 71 and opens the other. The exhaust switching valve 73 is capable of switching which of the exhaust passage 72 and the exhaust bypass passage 71 is closed, and which is opened.

When the exhaust switching valve 73 closes the exhaust bypass passage 71 and opens the exhaust passage 72, most of exhaust gas from the second exhaust discharge port 56 flows through the second exhaust inlet 35, the exhaust passage 72, and the second exhaust outlet 36 in that order, thereby rotating the second turbine 32. In contrast, when the exhaust switching valve 73 closes the exhaust passage 72 and opens the exhaust bypass passage 71, most of exhaust gas from the second exhaust discharge port 56 flows through the second exhaust inlet 35, the exhaust bypass passage 71, and the second exhaust outlet 36 in that order, so that the second turbine 32 is practically not rotated. On the other hand, exhaust gas from the first exhaust discharge port 55 passes through the first exhaust inlet 25 and flows through the first turbine housing 24, thereby rotating the first turbine 22. Thereafter, the exhaust gas is discharged form the first exhaust outlet 26 to the downstream side of the exhaust passage 14.

Except for the above described differences (including the structure for attaching the first turbine housing 24 and the second turbine housing 34 to the exhaust manifold 50), the present not-claimed embodiment is the same as the previous embodiment. Therefore, even in a case where two turbochargers are arranged in parallel with respect to an engine, the same advantages as the previous embodiment are achieved.

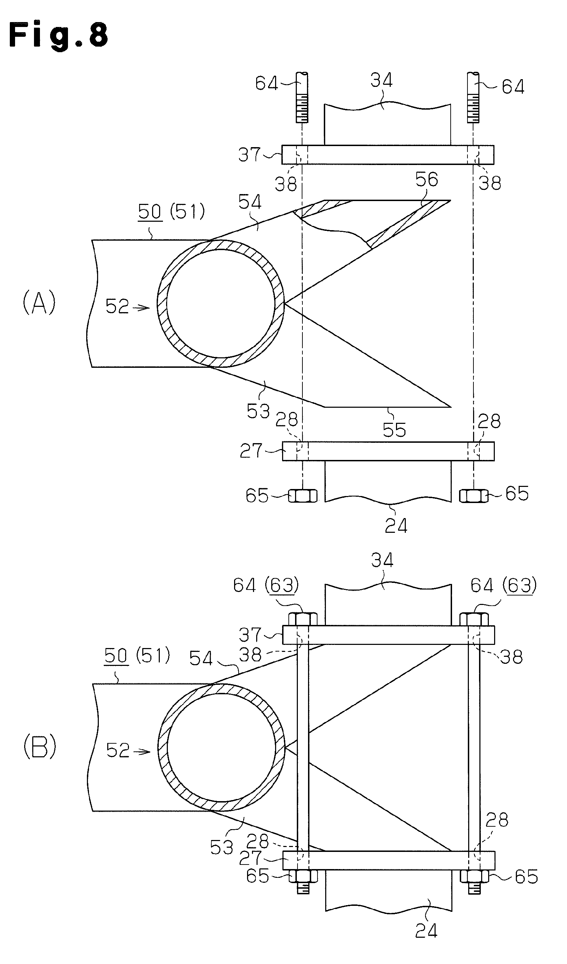

As shown in the not claimed embodiment of Figs. 8(A) and 8(B), the first branch pipe section 53 and the second branch pipe section 54 may be inclined relative to the flow direction of exhaust gas (horizontal direction) in the converging portion 52. In this case, the converging portion 52 of the exhaust manifold 50 is located at a position away from a space between the first flange 27 and the second flange 37. That is, for example, the converging portion 52 is not held between the first flange 27 and the second flange 37. However, even in this case, since the first flange 27 and the second flange 37 are fastened to each other by the fasteners 63 (the bolt 64 and the nuts 65), the same operations and advantages as the previous embodiments are achieved.

In the exhaust passage 14, the first turbine housing 24 and the second turbine housing 34 may be attached to parts different from the exhaust manifold 50. In this case, the first exhaust discharge port 55 and the second exhaust discharge port 56 open in different directions at the same position in the flow direction of exhaust gas.

## Claims

1. A structure for attaching turbine housings of a twin turbocharging system, the structure comprising:
a first branch pipe section (53) provided in an exhaust manifold (50), the first branch pipe section branching and extending from a converging portion (52) at which flows of exhaust gas from the engine (12) merge, and the first branch pipe section (53) having a first exhaust discharge port (55) at the downstream end thereof;
a second branch pipe section (54) branching from the converging portion (52) and extending in a direction different from the first branch pipe section, wherein the second branch pipe section (54) has a second exhaust discharge port (56) at the downstream end thereof, and, together with the first branch pipe section (53), divides the exhaust gas merging at the converging portion (52) into two flows, the first branch pipe section (53) and the second branch pipe section (54) extending in the opposite directions and forming a straight line, while being perpendicular to the flow direction of exhaust gas in the converging portion (52);
a first turbine housing (24) located downstream of the first exhaust discharge port (55), the first turbine housing (24) having a first exhaust inlet (25), a first flange (27) provided at a position about the first exhaust inlet (25) and a first turbine (22), wherein the first turbine (22) is rotated by exhaust gas introduced via the first exhaust inlet (25);
a second turbine housing (34) located downstream of the second exhaust discharge port (56), the second turbine housing (34) having a second exhaust inlet (35), a second flange (37) provided at a position about the second exhaust inlet (35) and a second turbine (32), wherein, when exhaust gas is introduced via the second exhaust inlet (35), the second turbine (32) is rotated by exhaust gas; and
a fastener (63), wherein, with the first branch pipe section (53) and the second branch pipe section (54) sandwiched by the first turbine housing (24) and the second turbine housing (34), the first exhaust inlet (25) brought close to the first exhaust discharge port (55), and the second exhaust inlet (35) brought close to the second exhaust discharge port (56), the fastener (63) fastens, to each other, a part of the first turbine housing (24) in the vicinity of the first exhaust inlet (25) and a part of the second turbine housing (34) in the vicinity of the second exhaust inlet (35); wherein
a flange corresponding to the first flange (27) is not provided about the first exhaust discharge port (55), and a flange corresponding to the second flange (37) is not provided about the second exhaust discharge port (56);
a first exhaust outlet (26), which is an outlet for exhaust gas that has passed through the first turbine housing (24), opens at a position in the first turbine housing (24) that faces the first branch pipe section (53);
an exhaust sub-inlet (39), which is an inlet of exhaust gas different from the second exhaust inlet (35), opens in a part of the second turbine housing (34) that faces the second exhaust discharge port (56) and is different from the position of the second exhaust inlet (35);
a communication pipe (57) is provided in the vicinity of the first branch pipe section (53) and the second branch pipe section (54), and is connected to an arbitrary part of the exhaust manifold (50), the communication pipe (57) connecting the first exhaust outlet (26) and the exhaust sub-inlet (39) to each other when the first turbine housing (24) and the second turbine housing (34) are fastened to each other by the fastener (63);
the exhaust manifold (50) includes a plurality of pipes (51), through which exhaust gas from the combustion chambers (17) of the cylinder (11) flows, and the converging portion (52) into which the pipes (51) are merged;
the communication pipe (57) is located at a position surrounded by the engine (12), two of the pipes (51), and the converging portion (52);
the fastener (63) includes a bolt (64) and a nut (65) for being threaded to the bolt (64), the bolt (64) and the nut (65) fastening the first turbine housing (24) and the second turbine housing (34); and
when the nut (65) threadable to the bolt (64) is tightened, the distance between the first turbine housing (24) and the second turbine housing (34) is reduced, the first turbine housing (24) is pressed against a part of an exhaust passage (14) in the vicinity of the first exhaust discharge port (55), and the second turbine housing (34) is pressed against a part of the exhaust passage (14) in the vicinity of the second exhaust discharge port (56), this fastens the first and second turbine housings (24, 34) to the exhaust passage (14), and no structure directly fastens the part of the first turbine housing (24) in the vicinity of the first exhaust outlet (26) to the communication pipe (57), and no structure directly fastens the part of the second turbine housing (34) in the vicinity of the exhaust sub-inlet (39) to the communication pipe (57).

2. The structure for attaching turbine housings of a twin turbocharging system, according to claim 1, wherein
the first turbine housing (24) and the second turbine housing (34) are fastened by the fastener (63) and at the first flange (27) and the second flange (37).

## Patentansprüche

1. Struktur zum Anbringen von Turbinengehäusen eines Doppelturboladersystems, wobei die Struktur aufweist:
einen ersten Zweigleitungsabschnitt (53) in einem Abgasverteilerkrümmer (50), wobei der erste Zweigleitungsabschnitt von einem Verzweigungsabschnitt (52), an welchem Abgasströme von einem Verbrennungsmotor (12) zusammentreffen, abzweigt und sich erstreckt und der erste Zweigleitungsabschnitt (53) an einem stromabwärtigen Ende hiervon einen ersten Abgasauslassanschluss (55) hat;
einen zweiten Zweigleitungsabschnitt (54), der von dem Verzweigungsabschnitt (52) abzweigt und sich in einer Richtung unterschiedlich zu dem ersten Zweigleitungsabschnitt erstreckt, wobei der zweite Zweigleitungsabschnitt (54) einen zweiten Abgasauslassanschluss (56) an seinem stromabwärtigen Ende hat und zusammen mit dem ersten Zweigleitungsabschnitt (53) das am Verzweigungsabschnitt (52) zusammentreffende Abgas in zwei Ströme unterteilt, wobei sich der erste Zweigleitungsabschnitt (53) und der zweite Zweigleitungsabschnitt (54) in entgegengesetzte Richtungen erstrecken und eine gerade Linie bilden, wobei sie senkrecht zur Strömungsrichtung des Abgases in dem Verzweigungsabschnitt (52) sind;
ein erstes Turbinengehäuse (24), das stromabwärts des ersten Abgasauslassanschlusses (55) liegt, wobei das erste Turbinengehäuse (24) einen ersten Abgaseinlass (25), einen ersten Flansch (27), der an einer Position um den ersten Abgaseinlass (25) herum angeordnet ist und eine erste Turbine (22) aufweist, wobei die erste Turbine (22) durch Abgas in Drehung versetzt wird, welches über den ersten Abgaseinlass (25) eingebracht wird;
ein zweites Turbinengehäuse (34), welches stromabwärts des zweiten Abgasauslassanschlusses (56) liegt, wobei das zweite Turbinengehäuse (34) einen zweiten Abgaseinlass (35), einen zweiten Flansch (37), der an einer Position um den zweiten Abgaseinlass (35) herum angeordnet ist und eine zweite Turbine (32) aufweist, wobei, wenn Abgas über den zweiten Abgaseinlass (35) eingebracht wird, die zweite Turbine (32) durch das Abgas in Drehung versetzt wird; und
eine Befestigung (63), wobei unter Einschluss des ersten Zweigleitungsabschnitts (53) und des zweiten Zweigleitungsabschlusses (54) zwischen dem ersten Turbinengehäuse (24) und dem zweiten Turbinengehäuse (34) der erste Abgaseinlass (25) nahe an den ersten Abgasauslassanschluss (55) herangebracht ist und der zweite Abgaseinlass (35) nahe an den zweiten Abgasauslassanschluss (56) herangebracht ist, wobei die Befestigung (63) einen Teil des ersten Turbinengehäuses (24) nahe dem ersten Abgaseinlass (25) und einen Teil des zweiten Turbinengehäuses (34) nahe dem zweiten Abgaseinlass (35) miteinander befestigt; wobei
ein Flansch entsprechend dem ersten Flansch (27) nicht um den ersten Abgasauslassanschluss (55) herum angeordnet ist und ein Flansch entsprechend dem zweiten Flansch (37) nicht um den zweiten Abgasauslassanschluss (56) herum angeordnet ist;
ein erster Abgasauslass (26), der ein Auslass für Abgas ist, welches das erste Turbinengehäuse (24) durchlaufen hat, sich an einer Position in dem ersten Turbinengehäuse (24) öffnet, welche zu dem ersten Zweigleitungsabschnitt (53) weist;
ein Abgasuntereinlass (39), der ein Einlass für Abgas unterschiedlich zu dem zweiten Abgaseinlasskanal (35) ist, sich in einem Teil des zweiten Turbinengehäuses (34) öffnet, der zu dem zweiten Abgasauslassanschluss (56) zeigt und unterschiedlich zur Position des zweiten Abgaseinlasses (35) ist;
eine Verbindungsleitung (57) nahe dem ersten Zweigleitungsabschnitt (53) und dem zweiten Zweigleitungsabschnitt (54) angeordnet ist und mit einem beliebigen Teil des Abgasverteilerkrümmers (50) verbunden ist, wobei die Verbindungsleitung (57) den ersten Abgasauslass (26) und den Abgasuntereinlass (39) miteinander verbindet, wenn das erste Turbinengehäuse (24) und das zweite Turbinengehäuse (34) miteinander über die Befestigung (63) verbunden sind;
der Abgasverteilerkrümmer (50) eine Mehrzahl von Leitungen (51) aufweist, durch welche Abgas von Brennkammern (17) von Zylindern (11) fließt, sowie den Verzweigungsabschnitt (52), in welchem die Leitungen (51) zusammenlaufen;
wobei die Verbindungsleitung (57) an einer Position liegt, welche von dem Verbrennungsmotor (12), zwei der Leitungen (51) und dem Verzweigungsabschnitt (52) umgeben ist;
die Befestigung (63) eine Schraube (64) und eine Mutter (65) für einen Schraubeingriff mit der Schraube (64) aufweist, wobei Schraube (64) und Mutter (65) das erste Turbinengehäuse (24) und das zweite Turbinengehäuse (34) befestigen; und
wenn die mit der Schraube (64) verschraubbare Mutter (65) angezogen wird, der Abstand zwischen dem ersten Turbinengehäuse (24) und dem zweiten Turbinengehäuse (34) verringert wird, das erste Turbinengehäuse (24) gegen einen Teil einer Abgasleitung (14) nahe dem ersten Abgasauslassanschluss (55) gedrückt wird und das zweite Turbinengehäuse (34) gegen einen Teil der Abgasleitung (14) nahe dem zweiten Abgasauslassanschluss (56) gedrückt wird, was die ersten und zweiten Turbinengehäuse (24, 34) mit der Abgasleitung (14) verbindet, wobei keine Struktur unmittelbar den Teil des ersten Turbinengehäuses (24) nahe dem ersten Abgasauslass (26) mit der Verbindungsleitung (57) verbindet und keine Struktur unmittelbar den Teil des zweiten Turbinengehäuses (34) nahe dem Abgasuntereinlass (39) mit der Verbindungsleitung (57) verbindet.

2. Struktur zum Anbringen von Turbinengehäusen eines Doppelturboladersystems nach Anspruch 1, wobei
das erste Turbinengehäuse (24) und das zweite Turbinengehäuse (34) durch die Befestigung (63) und den ersten Flansch (27) und den zweiten Flansch (37) festgelegt sind.

## Revendications

1. Structure destinée à fixer des carters de turbine d'un système à deux turbocompresseurs, la structure comprenant :
une première section (53) de tuyau en dérivation disposée dans un collecteur d'échappement (50), la première section de tuyau en dérivation étant en dérivation et s'étendant depuis une partie de convergence (52) au niveau de laquelle fusionnent des flux de gaz d'échappement provenant du moteur (12), la première section (53) de tuyau en dérivation ayant un premier orifice d'évacuation d'échappement (55) au niveau de son extrémité aval ;
une seconde section (54) de tuyau en dérivation étant en dérivation à partir de la partie de convergence (52) et s'étendant dans une direction différente de la première section de tuyau en dérivation, dans laquelle la seconde section (54) de tuyau en dérivation possède un second orifice d'évacuation d'échappement (56) au niveau de son extrémité aval et, conjointement avec la première section (53) de tuyau en dérivation, divise les gaz d'échappement fusionnant au niveau de la partie de convergence (52) en deux flux, la première section (53) de tuyau en dérivation et la seconde section (54) de tuyau en dérivation s'étendant en sens contraire et formant une ligne droite, tout en étant perpendiculaires à la direction d'écoulement des gaz d'échappement dans la partie de convergence (52) ;
un premier carter de turbine (24) situé en aval du premier orifice d'évacuation d'échappement (55), le premier carter de turbine (24) ayant une première entrée d'échappement (25), une première bride (27) disposée à une position à proximité de la première entrée d'échappement (25) et une première turbine (22), dans laquelle la première turbine (22) est entraînée en rotation par des gaz d'échappement introduits via la première entrée d'échappement (25) ;
un second carter de turbine (34) situé en aval du second orifice d'évacuation d'échappement (56), le second carter de turbine (34) ayant une seconde entrée d'échappement (35), une seconde bride (37) disposée à une position à proximité de la seconde entrée d'échappement (35) et une seconde turbine (32), dans laquelle, lorsque des gaz d'échappement sont introduits via la seconde entrée d'échappement (35), la seconde turbine (32) est entraînée en rotation par les gaz d'échappement ; et
une fixation (63), dans laquelle, avec la première section (53) de tuyau en dérivation et la seconde section (54) de tuyau en dérivation prises en sandwich par le premier carter de turbine (24) et le second carter de turbine (34), la première entrée d'échappement (25) amenée près du premier orifice d'évacuation d'échappement (55), et la seconde entrée d'échappement (35) amenée près du second orifice d'évacuation d'échappement (56), la fixation (63) fixe, l'une à l'autre, une partie du premier carter de turbine (24) au voisinage de la première entrée d'échappement (25) et une partie du second carter de turbine (34) au voisinage de la seconde entrée d'échappement (35),
dans laquelle il n'y a pas, au voisinage du premier orifice d'évacuation d'échappement (55), de bride correspondant à la première bride (27), et il n'y a pas, au voisinage du second orifice d'évacuation d'échappement (56), de bride correspondant à la seconde bride (37),
dans laquelle une première sortie d'échappement (26), qui est une sortie pour des gaz d'échappements qui sont passés à travers le premier carter de turbine (24), débouche à une position dans le premier carter de turbine (24) qui fait face à la première section (53) de tuyau en dérivation,
dans laquelle une entrée secondaire d'échappement (39), qui est une entrée de gaz d'échappement différente de la seconde entrée d'échappement (35), débouche dans une partie du second carter de turbine (34) qui fait face au second orifice d'évacuation d'échappement (56) et qui est différente de la position de la seconde entrée d'échappement (35) ;
dans laquelle un tuyau de communication (57) est disposé au voisinage de la première section (53) de tuyau en dérivation et de la seconde section (54) de tuyau en dérivation, et est raccordé à une partie quelconque du collecteur d'échappement (50), le tuyau de communication (57) raccordant l'une à l'autre la première sortie d'échappement (26) et l'entrée secondaire d'échappement (39) lorsque le premier carter de turbine (24) et le second carter de turbine (34) sont fixés l'un à l'autre par la fixation (63),
dans laquelle le collecteur d'échappement (50) inclut une pluralité de tuyaux (51), par lesquels s'écoulent les gaz d'échappement provenant des chambres de combustion (17) du cylindre (11), et la partie de convergence (52) en laquelle sont fusionnés les tuyaux (51),
dans laquelle le tuyau de communication (57) est situé à une position entourée par le moteur (12), par deux des tuyaux (51) et par la partie de convergence (52),
dans laquelle la fixation (63) inclut une vis (64) et un écrou (65) destiné à se visser sur la vis (64), la vis (64) et l'écrou (65) fixant le premier carter de turbine (24) et le second carter de turbine (34), et
dans laquelle, lorsque l'écrou (65) pouvant se visser sur la vis (64) est serré, la distance entre le premier carter de turbine (24) et le second carter de turbine (34) se réduit, le premier carter de turbine (24) est poussé contre une partie d'un passage d'échappement (14) au voisinage du premier orifice d'évacuation d'échappement (55), et le second carter de turbine (34) est poussé contre une partie du passage d'échappement (14) au voisinage du second orifice d'évacuation d'échappement (56), ceci fixe les premier et second carters de turbine (24, 34) au passage d'échappement (14), et aucune structure ne fixe directement la partie du premier carter de turbine (24) au voisinage de la première sortie d'échappement (26) au tuyau de communication (57), et aucune structure ne fixe directement la partie du second carter de turbine (34) au voisinage de l'entrée secondaire d'échappement (39) au tuyau de communication (57).

2. Structure selon la revendication 1 destinée à fixer des carters de turbine d'un système à deux turbocompresseurs, dans laquelle le premier carter de turbine (24) et le second carter de turbine (34) sont fixés par la fixation (63) et au niveau de la première bride (27) et de la seconde bride (37).
